# EUROPÄISCHE PATENTSCHRIFT

(11) **EP 3 457 010 B1**
(45) Veröffentlichungstag und Bekanntmachung des Hinweises auf die Patenterteilung: **01.04.2020**
(21) Anmeldenummer: 18193570.1
(22) Anmeldetag: 10.09.2018
(51) Int. Cl.: F16K 11/074, F16K 31/524

(54) **FLUIDUMSTELLER**
FLUID DIVERTER
DÉRIVEUR DE FLUIDE

(30) Priorität: 15.09.2017 DE 102017216413
(43) Veröffentlichungstag der Anmeldung: 20.03.2019
(73) Patentinhaber: Hansgrohe SE, 77761 Schiltach (DE)
(72) Erfinder: Klein, Christiane, 50823 Köln (DE); Melle, Fabian, 77799 Ortenberg (DE)
(74) Vertreter: Patentanwälte Ruff, Wilhelm, Beier, Dauster & Partner mbB

(56) Entgegenhaltungen:
- EP-A1- 3 135 970
- EP-A2- 1 281 899
- DE-A1- 1 750 380
- DE-A1-102013 213 275

## Beschreibung

Die Erfindung bezieht sich auf einen Fluidumsteller mit einem Gehäusekörper, der einen Fluideinlasskanal und mehrere strömungstechnisch parallele Fluidauslasskanäle aufweist, einem Umstellkörper, der einen Fluideintritt, mindestens einen Fluidaustritt und eine Fluidführung vom Fluideintritt zum Fluidaustritt aufweist und bezüglich einer Längsachse zwischen mindestens zwei unterschiedlichen Betriebsstellungen kombiniert achsparallel translationsbeweglich und drehbeweglich im Gehäusekörper angeordnet ist, und einer Betätigungseinheit zur Betätigung des Umstellkörpers. Der Umstellkörper gibt in den unterschiedlichen Betriebsstellungen eine Fluidverbindung seines Fluidaustritts zum jeweiligen Fluidauslasskanal in unterschiedlicher Weise frei bzw. sperrt sie ab, wobei das Freigeben bzw. Absperren dahingehend zu verstehen ist, dass ein zu der betreffenden Fluidverbindung gehöriger effektiver Durchflussquerschnitt mindestens teilweise, d.h. vollständig oder nur teilweise, freigegeben bzw. abgesperrt wird. Dies schließt auch den Fall ein, dass in mindestens einer der Betriebsstellungen mindestens zwei der Fluidauslasskanäle gleichzeitig mindestens teilweise geöffnet sein können, d.h. dass für diese Fluidauslasskanäle deren Fluidverbindung zum Fluideinlasskanal über den Umstellkörper jeweils mindestens teilweise freigegeben ist. Dabei bleibt der Umstellkörper über seinen Fluideintritt in jeder dieser Betriebsstellungen mit dem Fluideinlasskanal in Fluidverbindung. Die Betätigungseinheit umfasst ein nutzerbedienbar am Gehäusekörper angeordnetes Bedienelement.

Derartige Fluidumsteller sind beispielsweise für sanitäre Wasserauslaufarmaturen verwendbar, um dem Benutzer zu ermöglichen, zwischen mehreren strömungstechnisch parallelen Wasserauslässen umzuschalten, so dass zugeführtes Wasser steuerbar z.B. nur aus einem oder einer gewünschten Kombination oder keinem der vorhandenen Wasserauslässe austritt. Dies kann z.B. bei Sanitärbrausen zur Einstellung unterschiedlicher Brausestrahlarten oder bei Badewannen-Auslaufarmaturen zur Umschaltung zwischen einem Wannenabgang und einem Brausenabgang genutzt werden.

Die kombinierte Beweglichkeit des Umstellkörpers translatorisch parallel zu einer Längsachse und drehbeweglich um die Längsachse hat oftmals Vorteile gegenüber alternativen Anordnungen, bei denen der Umstellkörper nur gedreht oder nur translatorisch bewegt wird. Zur Realisierung dieser kombinierten Axial- und Drehbewegung ist beispielsweise die Verwendung von Kulissenführungen für den Umstellkörper nach Art einer Kugelschreibermechanik bekannt.

So kann durch diese kombinierte Bewegungsfähigkeit der Umstellkörper mit seinem Fluidaustritt z.B. zunächst axial vom einem die Fluidauslasskanäle enthaltenden Bereich des Gehäusekörpers abgehoben werden, bevor er gedreht wird, wodurch sich unerwünschte Reibungseffekte an Dichtflächen vermeiden lassen, wie sie bei einer bloßen alternativen Verdrehung auftreten können. Der besagte Gehäusekörperbereich kann z.B. als eine Ventilsitzfläche für den dann als beweglicher Ventilkörper fungierenden Umstellkörper realisiert sein. Nach dem axialen Abheben kann der Umstellkörper gedreht und in der neuen, verdrehten Betriebsposition wieder axial zurückbewegt werden, um mit seinem mindestens einen Fluidaustritt fluidumstellend eine neue Überlappungskonfiguration mit den Fluidauslasskanälen zu bilden und auf diese Weise das dem Fluidumsteller über den Fluideinlasskanal zugeführte Fluid in anderer Weise auf dessen Fluidauslasskanäle zu verteilen, d.h. die Fluidverbindung des mindestens einen Fluidaustritts des Umstellkörpers zum jeweiligen Fluidauslasskanal entsprechend anders freizugeben oder abzusperren.

Dabei können die Fluidauslasskanäle des Gehäusekörpers z.B. für die erwähnte Gestaltung des betreffenden Gehäusekörperbereichs als Ventilsitzfläche eintrittsseitig in einer Ebene liegen, in der korrespondierend der mindestens eine Fluidaustritt des Umstellkörpers liegt, wenn sich der Umstellkörper in der jeweiligen Betriebsstellung befindet. Bei den alternativen herkömmlichen Anordnungen mit lediglich translatorisch bewegtem Umstellkörper ist dies nicht möglich, da der Umstellkörper in seinen unterschiedlichen Betriebsstellungen entsprechend axial versetzte Positionen einnimmt, so dass andere Konfigurationen erforderlich sind, um die Fluidverbindung vom Fluideinlasskanal zu den Fluidauslasskanälen des Gehäusekörpers in gewünschter Weise zu steuern. Zudem besitzen die herkömmlichen Anordnungen dieses Typs häufig relativ ungünstige Strömungsverhältnisse, die zu unerwünschten Strömungsgeräuschen und Strömungswiderständen führen können.

Es ist für Fluidumsteller der eingangs genannten Art bekannt, als Umstellkörper einen scheibenförmigen Ventilkörper zu verwenden, der einen oder mehrere Durchlassöffnungen und/oder Abdeckbereiche aufweist und in seinen Betriebsstellungen gegen einen als Ventilsitzfläche für den scheibenförmigen Ventilkörper fungierenden Gehäusekörperbereich, von dem die Fluideinlasskanäle abführen, in Fluidströmungsrichtung zur Anlage kommt. Derartige Fluidumsteller sind beispielsweise in den Patentschriften DE 10 2009 008 194 B4 und DE 10 2013 224 054 B3 offenbart, in denen auch Kulissenführungen vom Kugelschreibermechaniktyp zur kombinierten Axial- und Drehbewegung des Ventilkörpers verwendet werden.

Bei diesen herkömmlichen Umstellern wird für einen jeweiligen Umstellvorgang der scheibenförmige Ventilkörper zunächst axial entgegen der Fluidströmungsrichtung vom Ventilsitz wegbewegt, um dann in verdrehter Stellung wieder auf den Ventilsitz zurückgebracht zu werden, wobei die Verdrehung mit der abhebenden Axialbewegung und/oder der rückführenden Axialbewegung kombiniert sein kann oder nach der axialen Abhebebewegung und vor der axialen Rückkehrbewegung erfolgen kann. Dies bedeutet, dass im Betrieb des Fluidumstellers, wenn durch das zugeführte Fluid Fluiddruck ansteht, der scheibenförmige Ventilkörper gegen den Fluiddruck vom Ventilsitz wegbewegt werden muss, während der Fluiddruck die Rückkehrbewegung auf den Ventilsitz unterstützt. Dies resultiert in einem druckabhängigen Umstell- bzw. Schaltvorgang mit entsprechend dem Fluiddruck unterschiedlichen Betätigungskräften zum Abheben des Ventilkörpers vom Ventilsitz einerseits und zum Rückbewegen auf den Ventilsitz andererseits.

Die Patentschrift DE 101 37 611 C1 offenbart eine Umstellvorrichtung für eine Sanitäreinrichtung mit mindestens zwei Wasserverbrauchern, wobei diese Umstellvorrichtung einen Umstellkörper in Form einer lediglich um ihre Scheibenlängsachse drehbeweglichen Steuerscheibe aufweist.

Die Offenlegungsschrift FR 2 623 593 A1 offenbart eine automatisch durch Fluiddruck gesteuerte Umstellvorrichtung zum Verteilen eines zugeführten Fluids wahlweise auf je einen von mehreren Auslässen. Diese Umstellvorrichtung beinhaltet einen in einem zylindrischen Gehäuse fluiddicht angeordneten, zylindrischen Umstellkörper, der im Gehäuse mittels eines federbelasteten Schrittschaltwerks kombiniert in axialer Richtung bewegt und gedreht werden kann. Der zylindrische Umstellkörper weist in seiner ansonsten geschlossenen Bodenfläche eine Durchlassöffnung auf, die mittels einer beweglichen Dichtklappe bei Bewegung in der einen Axialrichtung verschlossen und bei Bewegung in der anderen Axialrichtung geöffnet werden kann.

Die Patentschrift US 6.276.659 B1 offenbart eine Absperrventilanordnung mit einem Fluideinlasskanal und einem oder zwei strömungstechnisch parallelen Fluidauslasskanälen, wobei jedem Fluidauslasskanal ein axialbeweglicher Absperrkörper zugeordnet ist, der mittels einer Drucktasten-Betätigungseinheit betätigt werden kann.

Der Erfindung liegt als technisches Problem die Bereitstellung eines Fluidumstellers der eingangs genannten Art zugrunde, der sich mit einer vergleichsweise günstigen Durchströmungscharakteristik realisieren lässt und/oder vergleichsweise funktionsgünstige Umstellvorgänge auch im Betrieb mit anstehendem Fluiddruck ermöglicht.

Die Erfindung löst dieses Problem durch die Bereitstellung eines Fluidumstellers mit den Merkmalen des Patentanspruchs 1.

Bei diesem Fluidumsteller weist der Umstellkörper einen fluiddicht im Fluideinlasskanal axial- und drehbeweglich geführten Eintrittsstutzen auf, der eintrittsseitig den Fluideintritt bildet. Dies ermöglicht eine vorteilhafte Durchströmungscharakteristik des Fluidumstellers und vorteilhafte Umstellvorgänge, d.h. Schaltvorgänge, die vom anstehenden Fluiddruck weitestgehend unabhängig oder verglichen mit dem oben erwähnten Stand der Technik zumindest deutlich weniger abhängig sind. Denn die fluiddichte axial- und drehbewegliche Führung des Eintrittsstutzens im Fluideinlasskanal macht es möglich, dass der Umstellkörper und damit auch der Fluidumsteller insgesamt ein im Wesentlichen gleichbleibendes Durchströmungsverhalten beibehält, unabhängig davon, ob er sich gerade zur Durchführung eines Schaltvorgangs zwischen zwei seiner Betriebsstellungen bewegt, und unabhängig davon, in welcher seiner Betriebsstellungen er sich befindet, wenn kein Schaltvorgang stattfindet. Außerdem lässt sich der effektive Durchströmungsquerschnitt des Umstellkörpers mindestens in seinem Eintrittsbereich durch die Tatsache, dass der Umstellkörper sowohl in seinen Betriebsstellungen als auch während Schaltvorgängen mit seinem Eintrittsstutzen fluiddicht im Fluideinlasskanal liegt, stets im Wesentlichen konstant halten. Zudem kann der auf den Umstellkörper wirkende Fluidruck minimal gehalten werden, und das Herausbewegen des Umstellkörpers aus seiner jeweiligen Betriebsstellung lässt sich so gestalten, dass keine signifikanten Fluiddruckkräfte überwunden werden müssen.

In Weiterbildung der Erfindung weist der Fluideintritt des Umstellkörpers einen zum Fluideinlasskanal konformen Durchlassquerschnitt auf. Dies ermöglicht eine weitere Optimierung des Strömungsverhaltens des Fluidumstellers und seiner vom Fluiddruck weitestgehend unabhängigen Schaltcharakteristik.

In Weiterbildung der Erfindung ist der Umstellkörper um eine Längsmittenachse des Eintrittsstutzens als Drehachse drehbeweglich, und der Fluidaustritt ist gegenüber der Drehachse versetzt angeordnet. Dies ermöglicht eine konstruktiv einfache Drehführung des Eintrittsstutzens durch den ihn umgebenden Fluideinlasskanal, und durch den Drehachsenversatz kann der Fluidaustritt sehr einfach wahlweise mit den Fluideinlasskanälen in Fluidverbindung gebracht werden, wozu es z.B. genügen kann, die Fluideinlasskanäle mit gegenseitigem Drehrichtungsabstand gegenüber dieser Drehachse versetzt anzuordnen.

In Weiterbildung der Erfindung umfasst die Betätigungseinheit einen axialbeweglich im Gehäusekörper geführten Betätigungsstift und eine Kulissenführung zur Drehung des Umstellkörpers. Dadurch kann in konstruktiv vorteilhafter Weise der Umstellkörper wie gewünscht kombiniert translations- und drehbewegt werden.

In Ausgestaltung der Erfindung umfasst die Kulissenführung hierzu einen Kulissennocken am Umstellkörper und eine mit dem Kulissennocken zusammenwirkende Kulissenbahn am Gehäusekörper. Über den Betätigungsstift kann bei dieser Ausführung der Umstellkörper zu der axialen Translationsbewegung veranlasst werden, und durch die damit einhergehende Bewegung des Kulissennockens entlang der Kulissenbahn kann die gewünschte Drehung des Umstellkörpers bewirkt werden.

In weiterer Ausgestaltung der Erfindung umfasst die Kulissenführung ein elastisch nachgiebig am Gehäusekörper axialbeweglich und drehfest gehaltenes Gegenkulissenelement mit einem Schrägflächennocken, der mit einer Schrägfläche einen Anfangsabschnitt der Kulissenbahn für den Kulissennocken bildet. Bei dieser vorteilhaften Ausführung der Kulissenführung kann das Gegenkulissenelement der Axialbewegung des Kulissennockens zunächst elastisch nachgeben, um dann elastisch rückdrückend mit der Schrägfläche des Schrägflächennockens die Drehbewegung des Kulissennockens und damit des Umstellkörpers einzuleiten.

In Ausgestaltung der Erfindung umfasst die Kulissenführung eine Führungshülse des Gehäusekörpers, durch die sich der Eintrittsstutzen des Umstellkörpers hindurch erstreckt. Die Führungshülse weist eine Axialnut und eine daran in Drehrichtung anschließende Schrägfläche als Bestandteile der Kulissenbahn auf. Dies stellt eine konstruktiv vorteilhafte und mit relativ geringem Aufwand herzustellende Kulissenführung dar, wobei sich die Führungshülse einteilig mit dem Gehäusekörper oder als eigenständiges Bauteil fertigen lässt, das am restlichen Gehäusekörper festgelegt wird. Die Axialnut kann zur Führung des Kulissennockens und damit des Umstellkörpers während der Axialbewegung dienen, und die in Drehrichtung anschließende Schrägfläche der Führungshülse kann eine kombinierte Axial- und Drehbewegung des Umstellkörpers initiieren.

In Weiterbildung der Erfindung beinhaltet der Fluidumsteller ein elastisches Vorspannelement, das den Umstellkörper axial elastisch in seine jeweilige Betriebsposition vorspannt. Dies stabilisiert die Lage des Umstellkörpers in seiner jeweiligen Betriebsposition. Zum Einleiten eines jeweiligen Umstellvorgangs von der momentanen in eine gewünschte nächste Betriebsposition wird der Umstellkörper mittels der Betätigungseinheit gegen die Vorspannkraft des elastischen Vorspannelements aus seiner momentanen Betriebsposition herausbewegt.

In Weiterbildung der Erfindung weist der Gehäusekörper ein rohrförmiges Außengehäuse auf, und das Bedienelement beinhaltet eine Bedientaste, die um eine quer zu einer Längsachse des rohrförmigen Außengehäuses verlaufende Schwenkachse schwenkbeweglich ist. Der Gehäusekörper kann mit seinem rohrförmigen Außengehäuse gut in entsprechende Sanitärarmaturen eingebaut werden, und der Benutzer kann die Fluidumstellung bequem über die Bedientaste auslösen. Diese Ausführung kann sich z.B. für Sanitärbrausen vorteilhaft eignen.

In Weiterbildung der Erfindung ist der Fluidumsteller zum Einbau in eine sanitäre Wasserauslaufarmatur eingerichtet, wobei es sich bei der sanitären Wasserauslaufarmatur z.B. um einen Brausegriff oder Brausekopf einer Sanitärbrause handeln kann.

Vorteilhafte Ausführungsformen der Erfindung sind in den Zeichnungen dargestellt und werden nachfolgend beschrieben. Hierbei zeigen:
- Fig. 1: eine perspektivische Explosionsansicht eines Fluidumstellers mit beweglichem Umstellkörper und zwei Fluidauslasskanälen,
- Fig. 2: eine Perspektivansicht des Fluidumstellers von Fig. 1,
- Fig. 3: eine Seitenansicht des Fluidumstellers von Fig. 1,
- Fig. 4: eine Schnittansicht längs einer Linie IV-IV in Fig. 3,
- Fig. 5: eine Schnittansicht längs einer Linie V-V in Fig. 4,
- Fig. 6: eine Draufsicht auf eine Fluidaustrittsfläche des Umstellkörpers in einer Variante des Fluidumstellers von Fig. 1,
- Fig. 7: eine Perspektivansicht eines eintrittsseitigen Gehäuseteils des Fluidumstellers von Fig.6 mit eingefügtem Umstellkörper,
- Fig. 8A bis 8F: Draufsichten auf einen Fluidumsteller nach Art der Fig. 1 bis 7 mit abgezogenem eintrittsseitigem Gehäuseteil in unterschiedlichen Umstellkörperpositionen während eines Umstellvorgangs,
- Fig. 9: eine Perspektivansicht entsprechend Fig. 2 für eine Ausführungsvariante mit drei Fluidauslasskanälen,
- Fig. 10: eine Draufsicht auf den Fluidumsteller von Fig. 9 und
- Fig. 11: eine Schnittansicht längs einer Linie XI-XI in Fig. 10.

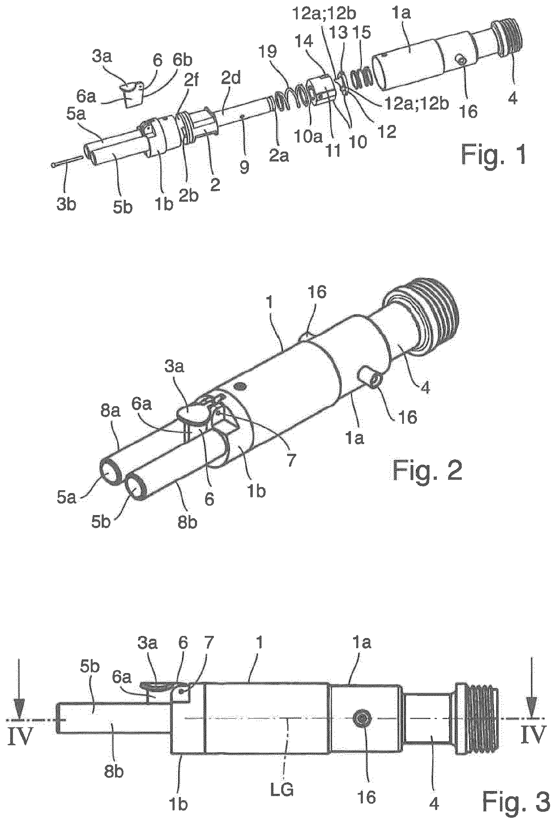

In den Fig. 1 bis 5 ist eine vorteilhafte Ausführungsform des erfindungsgemäßen Fluidumstellers mit einem Gehäusekörper 1, einem Umstellkörper 2 und einer Betätigungseinheit 3 dargestellt. Der Gehäusekörper 1 weist eine Fluideinlasskonfiguration mit einem Fluideinlasskanal 4 sowie eine Fluidauslasskonfiguration mit mehreren strömungstechnisch parallelen Fluidauslasskanälen 5a, 5b auf. Die Betätigungseinheit 3 umfasst ein nutzerbedienbar am Gehäusekörper 1 angeordnetes Bedienelement 3a.

Der Umstellkörper weist einen Fluideintritt 2a, mindestens einen Fluidaustritt 2b und eine Fluidführung 2c, d.h. einen Fluidströmungsweg, vom Fluideintritt 2a zum Fluidaustritt 2b auf und ist bezüglich einer Längsachse L zwischen mindestens zwei unterschiedlichen Betriebsstellungen kombiniert achsparallel translationsbeweglich und drehbeweglich im Gehäusekörper 1 angeordnet. Dabei steht der Umstellkörper 2 in den unterschiedlichen Betriebsstellungen über seinen Fluideintritt 2a jeweils mit dem Fluideinlasskanal 4 in Fluidverbindung, während er eine Fluidverbindung seines Fluidaustritts 2b zum jeweiligen Fluidauslasskanal 5a, 5b unterschiedlich mindestens teilweise freigibt oder absperrt. Mit anderen Worten bleibt der Umstellkörper 2, wenn er von einer aktuellen in eine nächste Betriebsstellung umgeschaltet wird, über seinen Fluideintritt 2a mit dem Fluideinlasskanal 4 in Fluidverbindung, während er mit seinem Fluidaustritt 2b auf eine andere Freigabe/Absperr-Konfiguration für die Fluidauslasskanäle 5a, 5b umschaltet. Der Umstellkörper 2 weist einen fluiddicht im Fluideinlasskanal 4 axial- und drehbeweglich geführten Eintrittsstutzen 2d auf, der eintrittsseitig den Fluideintritt 2a bildet.

Nachstehend wird auf weitere, optionale Merkmale des erfindungsgemäßen Fluidumstellers eingegangen, wie sie einzeln oder in beliebiger Kombination je nach Bedarf und Anwendungsfall in entsprechenden Ausführungsformen vorgesehen sein können.

So weist in vorteilhaften Ausführungen der Fluideintritt 2a des Umstellkörpers 2 einen zum Fluideinlasskanal 4 konformen Durchlassquerschnitt auf. Im gezeigten Beispiel der Figuren 1 bis 5 ist dies dadurch realisiert, dass der Fluideinlasskanal 4 von einem im Querschnitt kreisförmigen Innenraum eines hohlzylindrischen Teils des Gehäusekörpers 1 gebildet ist und der Eintrittsstutzen 2d des Umstellkörpers 2 als korrespondierender Hohlzylinder mit kreisförmigem Außendurchmesser derart gebildet ist, dass er fluiddicht koaxial in den Fluideinlasskanal 4 eingefügt werden kann und im Fluideinlasskanal 4 axialbeweglich und drehbeweglich geführt ist. Dadurch bleibt der Umstellkörper 2 mit seinem Fluideintritt 2a in jeder Axial- und Drehstellung und damit auch in allen seinen unterschiedlichen Betriebsstellungen vollständig mit dem Fluideinlasskanal 4 in Fluidverbindung.

In entsprechenden Ausführungen des Fluidumstellers ist der Umstellkörper 2 um eine Längsmittenachse L_{E} des Eintrittsstutzens als Drehachse drehbeweglich, und der Fluidaustritt 2b ist gegenüber der Drehachse versetzt angeordnet, wie beim Ausführungsbeispiel der Fig. 1 bis 5 ersichtlich, wobei hier speziell die Längsmittenachse L_{E} des Eintrittsstutzens 2d mit der Längsachse L des Umstellkörpers 2 zusammenfällt, bei der es sich insbesondere um eine Längsmittenachse handeln kann.

Wie ebenfalls im Ausführungsbeispiel der Fig. 1 bis 5 realisiert, weist in entsprechenden Ausführungen der erfindungsgemäße Fluidumsteller ein rohrförmiges Außengehäuse auf, das sich im gezeigten Beispiel aus einem fluideintrittsseitigen Gehäuseteil 1a und einem fluidaustrittsseitigen Gehäuseteil 1b zusammensetzt, wobei die beiden Gehäuseteile 1a, 1b lösbar zusammengesteckt oder in anderer Weise miteinander verbunden werden können. Alternativ kann das rohrförmige Außengehäuse auch aus mehr als zwei Teilen aufgebaut sein, z.B. dreiteilig unter Aufteilung des fluideintrittsseitigen Gehäuseteils 1a in einen eintrittsseitigen Teil und einen mittleren Hülsenteil zwischen dem eintrittsseitigen Teil und dem fluidaustrittsseitigen Gehäuseteil 1b. Eine Längsachse L_{G} des rohrförmigen Außengehäuses 1a, 1b fällt im gezeigten Beispiel mit der Längsachse L des Umstellkörpers 2 zusammen. Das Bedienelement 3a beinhaltet eine Bedientaste 6, die um eine quer zur Längsachse L_{G} des rohrförmigen Außengehäuses 1a, 1b verlaufende Schwenkachse 7 schwenkbeweglich ist. Speziell ist die Bedientaste 6 hierfür beim Ausführungsbeispiel der Fig. 1 bis 5 am austrittsseitigen Gehäuseteil 1b gehalten, wobei die Bedientaste 6 einen kielförmigen Fußteil 6a aufweist, mit dem sie sich in einen Zwischenraum zwischen zwei Rohrauslassstutzen 8a, 8b des Gehäusekörpers 1 hinein erstreckt, welche die Fluidauslasskanäle 5a, 5b bilden. Dies kann die Führung der Bedientaste 6 für ihre Bedienschwenkbewegung um die Schwenkachse 7 unterstützen.

In vorteilhaften Realisierungen des erfindungsgemäßen Fluidumstellers umfasst die Betätigungseinheit 3 einen axialbeweglich im Gehäusekörper 1 geführten Betätigungsstift 3b und eine zur Drehung des Umstellkörpers 2 dienende Kulissenführung 3c. Im Ausführungsbeispiel der Fig. 1 bis 5 ist der Betätigungsstift 3b als Druckstift ausgeführt, der am einen Ende gegen eine schräge Seitenkante 6b des Fußteils 6a der Bedientaste 6 anliegt und mit seinem gegenüberliegenden Ende am Umstellkörper 2 fixiert ist. Auf diese Weise bilden der Betätigungsstift 3b einen Druckstift und die Bedientaste 6 eine Drucktaste, so dass der Benutzer durch Drücken auf die Bedientaste 6 den Betätigungsstift 3b und mit ihm den Umstellkörper 2 axial vorschieben kann, d.h. in den Fig. 1 bis 5 nach rechts in Richtung Fluideintrittsseite des Fluidumstellers und damit entgegen einer Hauptströmungsrichtung des den Fluidumsteller durchströmenden Fluids.

Im Ausführungsbeispiel der Fig. 1 bis 5 umfasst die Kulissenführung 3c einen Kulissennocken 9 am Umstellkörper 2 und eine mit dem Kulissennocken 9 zusammenwirkende Kulissenbahn 10 am Gehäusekörper 1. Die Kulissenführung 3c ist in an sich herkömmlicher Weise nach Art einer Kugelschreibermechanik ausgebildet, wie dies beispielsweise aus dem oben erwähnten Stand der Technik bekannt ist. Dabei beinhaltet die Kulissenführung 3c im Ausführungsbeispiel der Fig. 1 bis 5 eine Führungshülse 11, durch die sich der Eintrittsstutzen 2d des Umstellkörpers 2 hindurch erstreckt. Die Führungshülse 11 ist starr mit dem übrigen Gehäusekörper 1 verbunden. Alternativ kann sie einteilig mit dem Gehäusekörper 1 als entsprechender Hülsenabschnitt desselben gebildet sein. Im gezeigten Beispiel ist die Führungshülse 11 in den eintrittsseitigen Gehäuseteil 1a eingeschoben und darin mittels Feststellschrauben fixiert, die in Querbohrungen 16 des Gehäusekörpers 1 eingeschraubt werden können. Die Kulissenbahn 10 setzt sich aus einer Axialnut 10a und einer daran in Drehrichtung anschließenden Schrägfläche 10b zusammen, wobei die Axialnut 10a z.B. innen an der Führungshülse 11 und die Schrägfläche 10b an einer Stirnseite der Führungshülse 11 ausgebildet sein können und der Begriff Axialnut vorliegend auch die Möglichkeit eines Axialschlitzes umfasst.

Weiter umfasst die Kulissenführung 3c im Beispiel der Fig. 1 bis 5 ein elastisch nachgiebig am Gehäusekörper 1 axialbeweglich und drehfest gehaltenes Gegenkulissenelement 12 mit einem Schrägflächennocken 12a, der mit einer Schrägfläche 12b einen Anfangsabschnitt der Kulissenbahn 10 für den Kulissennocken 9 bildet. Speziell ist dazu das Gegenkulissenelement 12 im gezeigten Beispiel ringförmig ausgebildet und mit einem radial abkragenden Steg 13 in einer Axialnut bzw. einem Axialschlitz 14 der Führungshülse 11 geführt und stützt sich über eine Schraubenfeder 15 axial am Gehäusekörper 1 ab, wozu dieser an der Innenseite seines rohrförmigen Gehäuseteils 1a eine geeignete Ringschulter aufweist. Je nach Bedarf umfasst die Kulissenführung 3c einen oder mehrere, z.B. zwei, drei oder vier, verteilt am Umfang des Eintrittsstutzens 2d des Umstellkörpers 2 angeordnete Kulissennocken 9 und zugehörige Axialnuten 10a zu deren Führung an der Innenseite der Führungshülse 11 sowie Schrägflächennocken 12a mit jeweiliger Schrägfläche 12b, wobei der bzw. die Schrägflächennocken 12a axial von einem ringförmigen Grundkörper des Gegenkulissenelements 12 abstehen.

Der Umstellkörper 2 ist in einem an seinen Eintrittsstutzen 2d axial anschließenden Fußbereich verbreitert. In diesem Fußbereich geht die Fluidführung 2c mittels eines entsprechend gebogenen Strömungswegabschnitts 2e vom zentrischen Verlauf im Eintrittsstutzen 2d in den gegenüber der Längsachse L außermittig versetzten Fluidaustritt 2b über, der hier von einer im Querschnitt kreisförmigen Austrittsöffnung gebildet ist. Der austrittsseitige Gehäuseteil 1b weist an seiner Eintrittsseite eine ebene Fläche auf, die als Ventilsitzfläche fungiert, gegen die der Umstellkörper 2 mit einer den Fluidaustritt 2b aufweisenden, ebenen Austrittsfläche 2f zur Anlage kommt und in der die beiden Fluidauslasskanäle 5a, 5b mit ihrer Eintrittsseite korrespondierend zum Fluidaustritt 2b außermittig versetzt im Drehwinkelabstand von 180° münden.

In der Betriebsstellung des Umstellkörpers 2, wie sie in den Fig. 1 bis 5 gezeigt ist, gibt der Umstellkörper 2 die Fluidverbindung seines Fluidaustritts 2b zum Fluidauslasskanal 5b frei, während er die Fluidverbindung zum anderen, strömungstechnisch parallelen Fluidauslasskanal 5a absperrt. Über den Fluideinlasskanal 4 zugeführtes Fluid gelangt folglich über den Fluideintritt 2a in den Umstellkörper 2, strömt durch diesen in seiner Fluidführung 2c hindurch zum Fluidaustritt 2b und gelangt von dort in den offenen Fluidauslasskanal 5b, während der andere Fluidauslasskanal 5a abgesperrt ist.

Durch Aktivierung der Betätigungseinheit 3, hier speziell durch Drücken der Bedientaste 6, kann der Benutzer den Umstellkörper 2 in eine neue Betriebsstellung umschalten. Dabei drückt der Betätigungsstift 3b den Umstellkörper 2 zunächst axial vor, d.h. hier entgegen der Hauptströmungsrichtung des Fluids, und die Kulissenführung 3c sorgt für die zusätzliche Drehbewegung des Umstellkörpers 2. Je nach Systemausführung ist die neue, nächste Betriebsstellung des Umstellkörpers 2 um 90° oder um 180° verdreht, wozu lediglich die Kulissenführung 3c entsprechend auszulegen ist. Die Drehbewegung erfolgt erst, nachdem sich der Umstellkörper 2 mit seiner Austrittsfläche 2f von der Ventilsitzfläche des austrittsseitigen Gehäuseteils 1b axial abgehoben hat. Bei der Ausführung mit jeweiliger Verdrehung um 180° wird von der gezeigten Betriebsposition mit offenem Fluidauslasskanal 5b und geschlossenem Fluidauslasskanal 5a auf die andere Betriebsstellung umgeschaltet, in welcher der Umstellkörper 2 die Fluidverbindung zum Fluidauslasskanal 5b absperrt und zum Fluidauslasskanal 5a öffnet. Bei der Ausführung mit jeweiliger Verdrehung um 90° existieren zusätzlich zu diesen beiden erwähnten Betriebsstellungen zwei zwischenliegende Betriebsstellungen bzw. Drehstellungen des Umstellkörpers 2, in denen dieser die Fluidverbindung zu beiden Fluidauslasskanäle 5a, 5b öffnet, indem sein Fluidaustritt 2b mit beiden Fluidauslasskanälen 5a, 5b überlappt. In einer alternativen Ausführung sperrt der Umstellkörper 2 in den beiden zwischenliegenden Drehstellungen die Fluidverbindung zu beiden Fluidauslasskanälen 5a, 5b ab, indem sein Fluidaustritt 2b mit keinem der beiden Fluidauslasskanäle 5a, 5b überlappt. In diesem Fall fungiert der Fluidumsteller folglich nicht nur als reiner Umsteller, sondern auch als Abstellorgan bzw. Absperrventil.

Die axiale Rückbewegung des Umstellkörpers 2 wird durch ein elastisches Vorspannelement 19 bewirkt, das den Umstellkörper 2 axial elastisch in seine jeweilige Betriebsstellung vorspannt. Im gezeigten Beispiel der Fig. 1 bis 5 ist das elastische Vorspannelement 19 als Schraubenfeder realisiert, die sich einerseits am Umstellkörper 2, wozu dieser am Übergang des Einlassstutzens 2d zum Fußteil eine zugehörige Abstützschulter aufweist, und andererseits am Gehäusekörper 1, hier speziell an der Führungshülse 11, abstützt.

Wie anhand der Fig. 1 bis 5 und deren obiger Beschreibung deutlich wird, ermöglicht dieser Fluidumsteller ein vom Fluiddruck praktisch unabhängiges Umschalten bei gleichzeitig strömungsgünstiger Gestaltung des Fluidströmungswegs vom Fluideinlasskanal 4 zu den Fluidauslasskanälen 5a, 5b. Die Fluidführung 2c des Umstellkörpers 2 weist einen über ihren Verlauf hinweg praktisch gleichbleibenden effektiven Strömungsquerschnitt und eine weitgehend geradlinige Strömungsführung auf, die ihrerseits parallel zur Längsachse L des Umstellkörpers 2 bzw. zur Längsachse LG des rohrförmigen Außengehäuses 1a, 1b ist. Die Strömung wird lediglich im gebogenen Abschnitt 2e der Fluidführung 2c geringfügig umgelenkt, wobei der zugehörige Umlenkwinkel jedoch geringer als 90° bleibt, in entsprechenden Ausführungen auch deutlich geringer, z.B. höchstens 60° oder höchstens 45°.

Der Umstellkörper 2 weist mit Ausnahme des Stirnrands des Eintrittsstutzens 2d am Fluideintritt 2a keine Fläche auf, die dem Fluiddruck in Fluidströmungsrichtung ausgesetzt ist, wodurch die erwähnte weitgehende Unabhängigkeit der Umschaltvorgänge vom Fluiddruck bewirkt wird. Für das axiale Abheben des Umstellkörpers 2 von seiner jeweiligen Betriebsposition in Anlage gegen die Ventilsitzfläche des austrittsseitigen Gehäuseteils 1b müssen keine merklichen, den Umstellkörper 2 in Fluidströmungsrichtung drückenden Fluiddruckkräfte überwunden werden, und auch die axiale Rückbewegung des Umstellkörpers 2 bleibt weitestgehend unbeeinflusst vom jeweils herrschenden Fluiddruck und kann daher allein durch geeignete Wahl des Vorspannelements 19 in gewünschter Weise gesteuert werden. Es werden somit quasi fluiddruckunabhängige Umschaltvorgänge mit geringen erforderlichen Betätigungskräften ermöglicht. Die strömungsgünstige Gestaltung des Fluidwegs im Fluidumsteller mit nur geringen Fluidumlenkungen minimiert zudem die Geräuschentwicklung des Fluidumstellers sowohl während Umschaltvorgängen als auch in der jeweiligen Betriebsstellung des Umstellkörpers 2. Wie am Beispiel der Fig. 1 bis 5 zudem deutlich wird, lässt sich der erfindungsgemäße Fluidumsteller kompakt und robust bauen und in seiner Größe an unterschiedliche Anwendungen z.B. in Sanitärbrausen und anderen sanitären Wasserauslaufarmaturen anpassen.

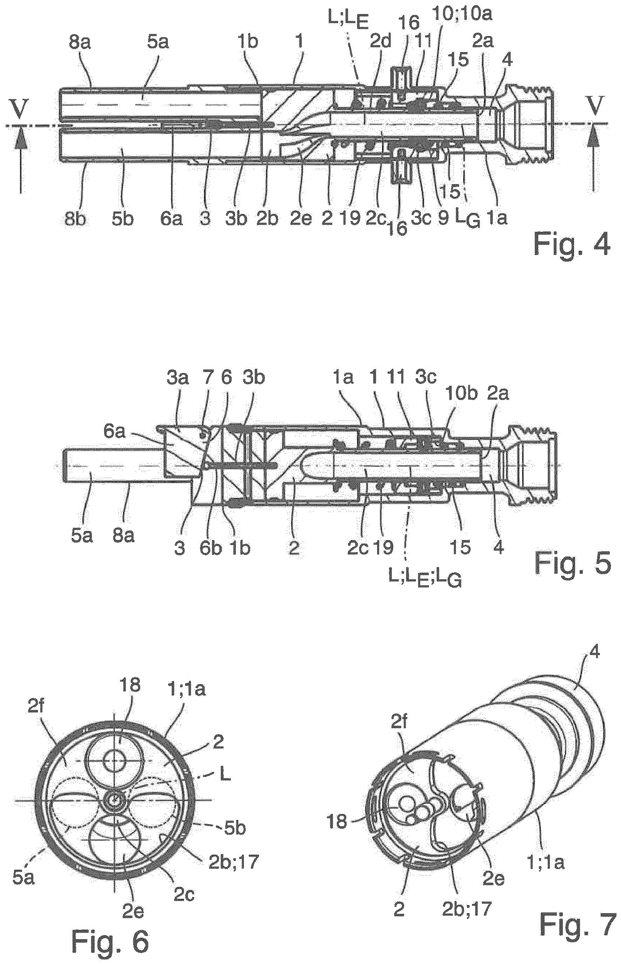

Die Fig. 6 und 7 veranschaulichen eine Variante des Fluidumstellers der Fig. 1 bis 5, wobei der Fluidumsteller gemäß den Fig. 6 und 7 mit Ausnahme der nachstehend erläuterten Unterschiede in seinem Aufbau und seinen Eigenschaften und Vorteilen dem Fluidumsteller der Fig. 1 bis 5 entspricht. Der Fluidumsteller der Fig. 6 und 7 ist gegenüber demjenigen der Fig. 1 bis 5 lediglich in der Gestaltung der Austrittsfläche 2f des Umstellkörpers 2 modifiziert.

Speziell ist beim Fluidumsteller der Fig. 6 und 7 der Fluidaustritt 2b nicht von einer kreisförmigen Austrittsöffnung, sondern von einer sichel- bzw. halbringförmigen Austrittsöffnung 17 gebildet, d.h. der kreisförmige Strömungsquerschnitt des Eintrittsstutzens 2d geht am Ende des gebogenen Abschnitts 2e in die Sichel-/Halbringform der Austrittsöffnung 17 über, wobei optional eine Zwischenkammer vor der Austrittsöffnung im Umstellkörper ausgebildet sein kann. Die Ausführungsform mit Zwischenkammer ermöglicht beispielsweise die zwischenliegende Betriebs- bzw. Drehstellung des Umstellkörpers 2, in denen beide Fluidauslasskanäle 5a, 5b geöffnet sind. In die Austrittsfläche 2f des Umstellkörpers 2 ist der Austrittsöffnung 17 bezüglich der Längsachse L gegenüberliegend eine kreisrunde Dichtplatte bzw. Dichtscheibe 18 eingefügt, die in ihrer Größe an den kreisrunden Eintrittsquerschnitt jedes der beiden Fluidauslasskanäle 5a, 5b angepasst ist, um diesen in der entsprechenden Stellung des Umstellkörpers 2 vollständig fluiddicht abzudecken.

Die Auslassöffnung 17 ist mit ihrer Sichel-/Halbringform so konfiguriert, dass der Umstellkörper 2 in seiner in Fig. 6 gezeigten Betriebsstellung die Fluidverbindung seines Fluidaustritts 2b zu beiden Fluidauslasskanälen 5a, 5b freigibt. Dazu ist in Fig. 6 gestrichelt die Lage der Fluidauslasskanäle 5a, 5b, die in dieser Ansicht eigentlich nicht zu sehen sind, gestrichelt markiert. Daraus ist ersichtlich, dass die Auslassöffnung 17 mit den Eintrittsquerschnitten beider Fluidauslasskanäle 5a, 5b überlappt, d.h. die Fluidverbindung zu beiden Fluidauslasskanälen 5a, 5b freigibt.

Für den Fluidumsteller der Fig. 6 und 7 wird vorzugsweise der oben erwähnte Umschalttyp mit jeweiliger 90°-Verdrehung des Umstellkörpers 2 von seiner momentanen in eine nächste Betriebsstellung verwendet. Wenn der Umstellkörper 2 von seiner in Fig. 6 gezeigten Betriebsposition in eine nächste, um 90° verdrehte Betriebsstellung umgeschaltet wird, gibt die Auslassöffnung 17 die Fluidverbindung nur noch zu einem der beiden Fluidauslasskanäle 5a, 5b, z.B. zum Fluidauslasskanal 5a, frei, während die Dichtscheibe 18 die Fluidverbindung zum anderen der beiden Fluidauslasskanäle 5a, 5b, z.B. zum Fluidauslasskanal 5b, vollständig absperrt. Dadurch gelangt zugeführtes Fluid nur noch in den einen der beiden Fluidauslasskanäle 5a, 5b und nicht mehr in den anderen. Wird der Umstellkörper 2 mit gleicher Drehrichtung in seine nächste Betriebsstellung verbracht, überlappt die Auslassöffnung 17 wiederum mit beiden Fluidauslasskanälen 5a, 5b, so dass wie in der Betriebsstellung des Umstellkörpers 2 von Fig. 6 zugeführtes Fluid wiederum in beide Fluidauslasskanäle 5a, 5b geleitet wird. Bei erneutem Umschalten des Umstellkörpers 2 in seine nächste, um 90° verdrehte Betriebsstellung wird dann der eine der beiden Fluidauslasskanäle 5a, 5b, z.B. der Auslasskanal 5a, von der Dichtscheibe 18 fluiddicht vollständig abgesperrt, während die Austrittsöffnung 17 die Fluidverbindung zum anderen der beiden Fluidauslasskanäle 5a, 5b, z.B. zum Auslasskanal 5b, vollständig freigibt. Dadurch gelangt dann zugeführtes Fluid spezifisch nur in den anderen der beiden Fluidauslasskanäle 5a, 5b. Durch erneutes Umschalten des Umstellkörpers 2 mit gleicher 90°-Drehrichtung gelangt dann der Umstellkörper 2 wieder in seine in Fig. 6 gezeigte Betriebsstellung mit Fluidzuführung zu beiden Fluidauslasskanälen 5a, 5b.

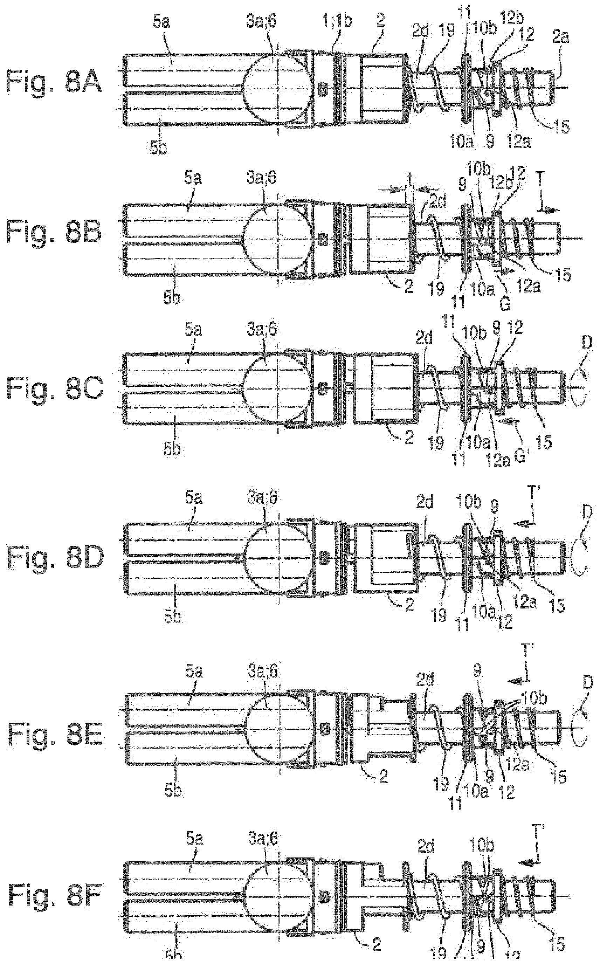

Die Fig. 8A bis 8F veranschaulichen den Verlauf eines Umschaltvorgangs für die Fluidumstellerausführungen gemäß den Fig. 1 bis 7, wenn die Kulissenführung 3c auf eine 90°-Verdrehung des Umstellkörpers 2 im Rahmen eines solchen Umschaltvorgangs ausgelegt ist. Damit die hierfür verantwortliche Kulissenmechanik besser erkennbar ist, ist in diesen Darstellungen der eintrittsseitige Gehäuseteil 1a abgenommen, und die Führungshülse 11 ist teilweise weggeschnitten gezeigt.

Fig. 8A zeigt den Fluidumsteller in Ausgangslage, in welcher sich der Umstellkörper 2 in einer seiner Betriebsstellungen befindet. Wenn der Benutzer die Betätigungseinheit 3 aktiviert, hier durch Drücken auf die Bedientaste 6, schiebt die Betätigungseinheit 3 den Umstellkörper 2 zunächst axial vor, wie in Fig. 8B durch einen Translationspfeil T und einen Translationsweg t angedeutet. Dabei wird der Umstellkörper 2 über seinen Kulissennocken 9 in der Axialnut 10a der Kulissenführung 3c axial geführt. Die axiale Vorbewegung erfolgt gegen die Rückstellkraft des elastischen Vorspannelements 19. Hingegen braucht kein merklicher entgegenwirkender Fluiddruck überwunden werden, da der Umstellkörper 2 keine entsprechende, einen merklichen Druckwiderstand verursachende Fläche besitzt, wie oben erläutert.

Fig. 8B zeigt den Umstellkörper 2 in einer axial vorgeschobenen Lage, in welcher er sich noch nicht verdreht hat und sein Kulissennocken 9 gegen den Schrägflächennocken 12a des Gegenkulissenelements 12 zur Anlage kommt, speziell gegen dessen Schrägfläche 12b. In dieser Stellung verhindert die Axialnut 10a noch ein Verdrehen des Umstellkörpers 2. Der Umstellkörper drückt nun das Gegenkulissenelement 12 gegen die Kraft der Feder 15 ein Stück weit axial zurück, wie durch einen Translationspfeil G symbolisiert.

Erst wenn durch das weitere axiale Vorbewegen des Umstellkörpers 2 dessen Kulissennocken 9 aus der Axialnut 10a herausgelangt ist, beginnt sich der Umstellkörper 2 zu drehen, indem nun der Kulissennocken 9 der Druckkraft ausweichen kann, die auf ihn durch eine Umfangsrichtungskomponente der vom Schrägflächennocken 12a auf den Kulissennocken 9 ausgeübten Kraft wirkt, welche von der zuvor unter Spannung gesetzten Feder 15 aufgebracht wird. Diese Lage des Umstellkörpers 2 ist in Fig. 8C dargestellt, wobei die Verdrehung des Umstellkörpers 2 mit einem Drehpfeil D symbolisiert ist. Der Kulissennocken 9 des Umstellkörpers 2 gelangt auf diese Weise durch die Wirkung des Gegenkulissenelements 12, das mit der Schrägfläche 12b seines Schrägflächennockens 12a einen Übergang für die Kulissenbahn 10 von der Axialnut 10a zur in Drehrichtung anschließenden Schrägfläche 10b bildet, in Drehrichtung von der Axialnut 10a zur anschließenden Schrägfläche 10b.

Sobald auf diese Weise der Kulissennocken 9 die Schrägfläche 10b der Kulissenbahn 10 erreicht hat, hat die axiale Rückstellkraft des elastischen Vorspannelements 19 auf den Umstellkörper 2 zur Folge, dass der Kulissennocken 9 an der Schrägfläche 10b der Kulissenbahn entlanggleitet, wodurch der Umstellkörper 2 zum einen seine Verdrehbewegung fortsetzt und zum anderen axial translatorisch zurückbewegt wird, wie in Fig. 8D mit einem Translationspfeil T' symbolisiert. Gleichzeitig drückt die Feder 15 das Gegenkulissenelement 12 wieder in seine Ausgangslage zurück, wie durch einen Translationspfeil G' symbolisiert. Fig. 8E zeigt den Umstellkörper 2 in einer Lage, in welcher sein Kulissennocken 9 fast am Ende der Schrägfläche 10b der Kulissenbahn 10 angekommen ist, wobei nun durch die Verdrehung des Umstellkörpers 2 ein anderer Kulissennocken 9 von in diesem Beispiel vier um je 90° in Umfangsrichtung versetzt am Eintrittsstutzen 2d des Umstellkörpers 2 angeordneten Kulissennocken 9 zu sehen ist. Das Gegenkulissenelement 12 hat wieder seine von der Feder 15 zurückgedrückte Ausgangsposition eingenommen.

Fig. 8F zeigt den Umstellkörper 2 in der neuen Betriebsstellung, in welcher er gegenüber der Ausgangslage von Fig. 8A um 90° verdreht ist. Der Kulissennocken 9 ist von der Schrägfläche 10b in die nächste der in diesem Beispiel vier Axialnuten 10a der Kulissenbahn 10 hineingelangt, wodurch sich der Umstellkörper 2 vollends axial zurückbewegt hat und mit seiner Austrittsfläche 2f wieder gegen die Ventilsitzfläche im austrittsseitigen Gehäuseteil 1b des Fluidumstellers anliegt.

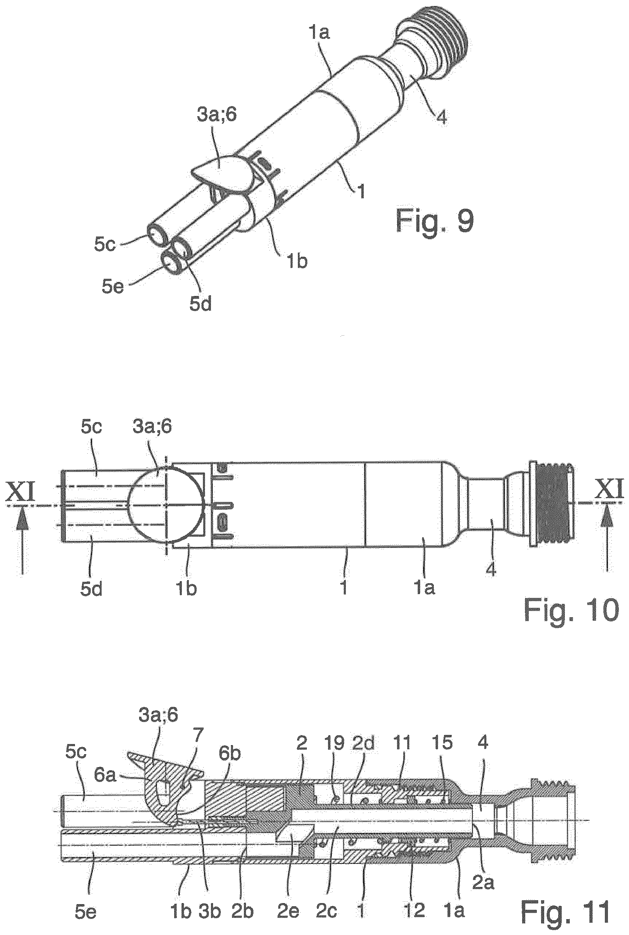

Es versteht sich, dass die Erfindung weitere vorteilhafte Ausführungsformen umfasst, wie sie sich für den Fachmann ohne weiteres ergeben. So ist beispielsweise in den Fig. 9 bis 11 eine Realisierung des erfindungsgemäßen Fluidumstellers dargestellt, die den bisher erwähnten Ausführungsformen mit dem Unterschied entspricht, dass hier drei strömungstechnisch parallele Fluidauslasskanäle 5c, 5d, 5e vorgesehen sind, die in einem Winkelabstand von 120° in Umfangsrichtung des rohrförmigen Außengehäuses 1a, 1b angeordnet sind. Je nach Ausführung des Fluidaustritts 2b des Umstellkörpers und der Kulissenführung zur verdrehten Positionierung des Umstellkörpers 2 zwischen seinen verschiedenen Betriebsstellungen lassen sich gewünschte Fluidführungskonfigurationen realisieren. Bei der in den Fig. 9 bis 11 gezeigten Ausführung ist der Umstellkörper 2 mit der versetzten, im Querschnitt kreisrunden Austrittsöffnung für den Fluidaustritt 2b entsprechend dem Ausführungsbeispiel der Fig. 1 bis 5 verwendet, und die Kulissenführung 3c ist dafür ausgelegt, den Umstellkörper 2 um jeweils 120° zu verdrehen, wenn er in die nächste Betriebsstellung umgeschaltet wird. Dazu kann der Umstellkörper 2 z.B. drei umfangsseitig am Eintrittsstutzen 2d im Winkelabstand von 120° angeordnete Kulissennocken aufweisen, und korrespondierend besitzt die Kulissenführung 3c dann drei in Umfangsrichtung versetzt angeordnete Axialnuten 10a und entsprechende zwischenliegende Schrägflächen 10b.

In diesem Fall bringt dann der Umstellkörper 2 jeweils einen der drei Fluidauslasskanäle 5c, 5d, 5e mit dem Fluideinlasskanal 4 in Fluidverbindung, während er die beiden anderen Auslasskanäle fluiddicht abgesperrt hält. In alternativen Ausführungen bringt der Umstellkörper 2 in entsprechenden Betriebsstellungen keinen oder zwei der drei Fluidauslasskanäle 5c, 5d, 5e oder alle drei mit dem Fluideinlasskanal 4 in Fluidverbindung. Im Übrigen gelten die oben zu den Ausführungsformen der Fig. 1 bis 8F erläuterten Funktionen, Eigenschaften und Vorteile für die Ausführung gemäß den Fig. 9 bis 11 in gleicher Weise.

Wie die gezeigten und oben erwähnten Ausführungsbeispiele deutlich machen, stellt die Erfindung einen vorteilhaften Fluidumsteller zur Verfügung, der weitgehend vom Fluiddruck unabhängige Schaltvorgänge ermöglicht und keine störenden Strömungsgeräusche verursacht. Der Fluidumsteller lässt sich kompakt bauen und in beliebigen Umgebungen verwenden, bei denen Bedarf an einem Fluidumsteller dieser Art besteht. Insbesondere eignet sich der Fluidumsteller zum Einbau in sanitäre Wasserauslaufarmaturen, wie Kopf-, Hand- und Seitenbrausen von Duschräumen und Badewannensystemen sowie in Küchenbrausen an Küchenspülen und in Waschtischmischern.

## Patentansprüche

1. Fluidumsteller, insbesondere für eine sanitäre Wasserauslaufarmatur, mit
- einem Gehäusekörper (1), der einen Fluideinlasskanal (4) und mehrere strömungstechnisch parallele Fluidauslasskanäle (5a, 5b) aufweist,
- einem Umstellkörper (2), der einen Fluideintritt (2a), mindestens einen Fluidaustritt (2b) und eine Fluidführung (2c) vom Fluideintritt zum Fluidaustritt aufweist und bezüglich einer Längsachse (L) zwischen mindestens zwei unterschiedlichen Betriebsstellungen kombiniert achsparallel translationsbeweglich und drehbeweglich im Gehäusekörper angeordnet ist, wobei er in den unterschiedlichen Betriebsstellungen über seinen Fluideintritt jeweils mit dem Fluideinlasskanal in Fluidverbindung steht und eine Fluidverbindung seines Fluidaustritts zum jeweiligen Fluidauslasskanal unterschiedlich mindestens teilweise freigibt oder absperrt, und
- einer Betätigungseinheit (3) zur Betätigung des Umstellkörpers, wobei die Betätigungseinheit ein nutzerbedienbar am Gehäusekörper angeordnetes Bedienelement (3a) umfasst,
**dadurch gekennzeichnet, dass**
- der Umstellkörper (2) einen fluiddicht im Fluideinlasskanal (4) axial- und drehbeweglich geführten Eintrittsstutzen (2d) aufweist, der eintrittsseitig den Fluideintritt (2a) bildet.

2. Fluidumsteller nach Anspruch 1, weiter **dadurch gekennzeichnet, dass** der Fluideintritt des Umstellkörpers einem zum Fluideinlasskanal konformen Durchlassquerschnitt aufweist.

3. Fluidumsteller nach Anspruch 1 oder 2, weiter **dadurch gekennzeichnet, dass** der Umstellkörper um eine Längsmittenachse (L_{E}) des Eintrittsstutzens als Drehachse drehbeweglich ist und der Fluidaustritt gegenüber der Drehachse versetzt angeordnet ist.

4. Fluidumsteller nach einem der Ansprüche 1 bis 3, weiter **dadurch gekennzeichnet, dass** die Betätigungseinheit einen axialbeweglich im Gehäusekörper geführten Betätigungsstift (3b) und eine Kulissenführung (3c) zur Drehung des Umstellkörpers umfasst.

5. Fluidumsteller nach Anspruch 4, weiter **dadurch gekennzeichnet, dass** die Kulissenführung einen Kulissennocken (9) am Umstellkörper und eine mit dem Kulissennocken zusammenwirkende Kulissenbahn (10) am Gehäusekörper umfasst.

6. Fluidumsteller nach Anspruch 5, weiter **dadurch gekennzeichnet, dass** die Kulissenführung ein elastisch nachgiebig am Gehäusekörper axialbeweglich und drehfest gehaltenes Gegenkulissenelement (12) mit einem Schrägflächennocken (12a) umfasst, der mit einer Schrägfläche (12b) einen Anfangsabschnitt der Kulissenbahn für den Kulissennocken bildet.

7. Fluidumsteller nach einem der Ansprüche 4 bis 6, weiter **dadurch gekennzeichnet, dass** die Kulissenführung eine Führungshülse (11) des Gehäusekörpers umfasst, durch die sich der Eintrittsstutzen des Umstellkörpers hindurch erstreckt und die eine Axialnut (10a) und eine daran in Drehrichtung anschließende Schrägfläche (10b) als Bestandteile der Kulissenbahn aufweist.

8. Fluidumsteller nach einem der Ansprüche 1 bis 7, weiter **gekennzeichnet durch** ein elastisches Vorspannelement (19), das den Umstellkörper axial elastisch in seine jeweilige Betriebsposition vorspannt.

9. Fluidumsteller nach einem der Ansprüche 1 bis 8, weiter **dadurch gekennzeichnet, dass**
- der Gehäusekörper ein rohrförmiges Außengehäuse (1a, 1b) aufweist und
- das Bedienelement eine Bedientaste (6) beinhaltet, die um eine quer zu einer Längsachse (L_{G}) des rohrförmigen Außengehäuses verlaufende Schwenkachse (7) schwenkbeweglich ist.

10. Fluidumsteller nach einem der Ansprüche 1 bis 9, weiter **dadurch gekennzeichnet, dass** er zum Einbau in eine sanitäre Wasserauslaufarmatur, insbesondere in einen Brausegriff oder Brausekopf einer Sanitärbrause, eingerichtet ist.

## Claims

1. Fluid switch-over device, preferably for a sanitary water discharge faucet, comprising
- a housing body (1) which includes a fluid inlet channel (4) and a plurality of fluid outlet channels (5a, 5b) arranged fluidically in parallel,
- a switch-over body (2) which includes a fluid inlet (2a), at least one fluid outlet (2b) and a fluid duct (2c) from the fluid inlet to the fluid outlet and is disposed within the housing body to be translationally movable axially parallel and rotationally movable in a combined manner in relation to a longitudinal axis (L) between at least two different operating positions, wherein said switch-over body in each of the different operating positions is in fluid connection to the fluid inlet channel via its fluid inlet and differentially unblocks or blocks at least partially a fluid connection of its fluid outlet to the respective fluid outlet channel, and
- an actuation unit (3) for actuating the switch-over body, wherein the actuation unit comprises an operating element (3a) disposed on the housing body to be user-operable,
**characterized in that**
- the switch-over body (2) comprises an inlet nozzle (2d) guided in a fluid-tight manner within the fluid inlet channel (4) for axial and rotational movement, said inlet nozzle constituting the fluid inlet (2a) on an inlet side.

2. Fluid switch-over device according to claim 1, further **characterized in that** the fluid inlet of the switch-over body has a passage cross section corresponding to that of the fluid inlet channel.

3. Fluid switch-over device according to claim 1 or 2, further **characterized in that** the switch-over body is rotatably movable about a central longitudinal axis (L_{E}) of the inlet nozzle as a rotational axis and the fluid outlet is disposed offset in relation to the rotational axis.

4. Fluid switch-over device according to any one of claims 1 to 3, further **characterized in that** the actuation unit comprises an actuation pin (3b) guided within the housing body for axial movement and a sliding guide mechanism (3c) for rotating the switch-over body.

5. Fluid switch-over device according to claim 4, further **characterized in that** the sliding guide mechanism comprises a sliding cam (9) on the switch-over body and a sliding track (10) on the housing body cooperating with the sliding cam.

6. Fluid switch-over device according to claim 5, further **characterized in that** the sliding guide mechanism comprises a counter sliding element (12) that is held elastically resilient, axially movable and rotationally fixed on the housing body, said counter sliding element having a beveled cam (12a) with a bevel surface (12b) constituting an initial section of the sliding track for the sliding cam.

7. Fluid switch-over device according to any one of claims 4 to 6, further **characterized in that** the sliding guide mechanism comprises a guiding sleeve (11) of the housing body, with the inlet nozzle of the switch-over body passing through said sleeve, and said sleeve including an axial groove (10a) and a bevel surface (10b) adjoining thereto in rotational direction as component parts of the sliding track.

8. Fluid switch-over device according to any one of claims 1 to 7, further **characterized by** an elastic bias element (19) to bias the switch-over body axially elastically in its respective operating position.

9. Fluid switch-over device according to any one of claims 1 to 8, further **characterized in that**
- the housing body comprises a tubular outer housing (1a, 1b), and
- the operating element includes an operating button (6) pivotable about a pivot axis (7) extending transversely in relation to a longitudinal axis (L_{G}) of the tubular outer housing.

10. Fluid switch-over device according to any one of claims 1 to 9, further **characterized in that** it is configured for installation into a sanitary water discharge faucet, preferably a shower handle or a shower head of a sanitary shower device.

## Revendications

1. Dispositif inverseur de fluide, en particulier pour une robinetterie sanitaire de sortie d'eau, comportant
- un corps de boîtier (1) comprenant un canal d'entrée de fluide (4) et plusieurs canaux de sortie de fluide (5a, 5b) parallèles les uns aux autres en termes d'écoulement,
- un corps d'inversion (2) qui présente une entrée de fluide (2a), au moins une sortie de fluide (2b) et un guidage de fluide (2c) depuis l'entrée de fluide jusqu'à la sortie de fluide et qui est disposé dans le corps de boîtier de manière à pouvoir être déplacé en translation parallèlement à l'axe et à pouvoir tourner par rapport à un axe longitudinal (L) entre au moins deux positions de fonctionnement différentes, et qui, dans les différentes positions de fonctionnement, est en communication fluidique avec le canal d'entrée de fluide respectif par son entrée de fluide et libère ou bloque de différentes manières au moins partiellement une communication fluidique de sa sortie de fluide avec le canal de sortie de fluide respectif, et
- une unité d'actionnement (3) pour actionner le corps d'inversion, l'unité d'actionnement comprenant un élément de commande (3a) actionnable par l'utilisateur et disposé sur le corps de boîtier,
**caractérisé en ce que**
- le corps d'inversion (2) possède un manchon d'entrée (2d) qui est guidé de façon étanche aux fluides et mobile axialement et en rotation dans le canal d'entrée de fluide (4) et qui constitue l'entrée de fluide (2a) du côté de l'entrée.

2. Dispositif inverseur de fluide selon la revendication 1,
**caractérisé en outre en ce que**
l'entrée de fluide du corps d'inversion présente une section transversale de passage qui est conforme au canal d'entrée du fluide.

3. Dispositif inverseur de fluide selon la revendication 1 ou 2,
**caractérisé en outre en ce que**
le corps d'inversion peut tourner autour d'un axe central longitudinal (L_{E}) du manchon d'entrée comme axe de rotation, et la sortie de fluide est disposée en décalage par rapport à l'axe de rotation.

4. Dispositif inverseur de fluide selon l'une des revendications 1 à 3,
**caractérisé en outre en ce que**
l'unité d'actionnement comprend une tige d'actionnement (3b) guidée de façon axialement mobile dans le corps de boîtier, et un guidage à coulisse (3c) pour la rotation du corps d'inversion.

5. Dispositif inverseur de fluide selon la revendication 4,
**caractérisé en outre en ce que**
le guidage à coulisse comprend un coulisseau (9) sur le corps d'inversion et une piste de coulissement (10) sur le corps de boîtier qui coopère avec le coulisseau.

6. Dispositif inverseur de fluide selon la revendication 5,
**caractérisé en outre en ce que**
le guidage à coulisse comprend un élément de coulisse antagoniste (12) qui est maintenu de façon élastiquement flexible, axialement mobile et fixe en rotation sur le corps de boîtier et qui présente une came à surface inclinée (12a) qui, avec une surface inclinée (12b), forme une portion initiale de la piste de coulissement pour le coulisseau.

7. Dispositif inverseur de fluide selon l'une des revendications 4 à 6,
**caractérisé en outre en ce que**
le guidage à coulisse comprend une douille de guidage (11) du corps de boîtier à travers laquelle s'étend le manchon d'entrée du corps d'inversion et qui présente une rainure axiale (10a) et une surface inclinée (10b) qui lui est adjacente en direction de rotation, en tant que composants de la piste de coulissement.

8. Dispositif inverseur de fluide selon l'une des revendications 1 à 7,
**caractérisé en outre par** un élément de précontrainte élastique (19) qui met le corps d'inversion sous précontrainte élastique axiale vers sa position de fonctionnement respective.

9. Dispositif inverseur de fluide selon l'une des revendications 1 à 8, **caractérisé en outre en ce que**
- le corps de boîtier comprend un boîtier extérieur tubulaire (1a, 1b), et
- l'élément de commande contient un bouton de commande (6) qui peut être pivoté autour d'un axe de pivotement (7) s'étendant transversalement à un axe longitudinal (L_{G}) du boîtier extérieur tubulaire.

10. Dispositif inverseur de fluide selon l'une des revendications 1 à 9,
**caractérisé en outre en ce que**
il est conçu pour être installé dans une robinetterie sanitaire de sortie d'eau, en particulier dans une poignée de douche ou dans une pomme de douche d'une douche sanitaire.
